**Europäisches Patentamt**

(19) **European Patent Office**

**Office européen des brevets**

(11) Veröffentlichungsnummer: **0 126 239**

**B1**

(12) # EUROPÄISCHE PATENTSCHRIFT

(45) Veröffentlichungstag der Patentschrift:
05.11.86

(51) Int. Cl.⁴: **F 16 J 15/54**

(21) Anmeldenummer: **84103203.0**

(22) Anmeldetag: **23.03.84**

(54) Berührungsfreie Dichtung.

(30) Priorität: **26.03.83 DE 3311121**

(43) Veröffentlichungstag der Anmeldung:
**28.11.84 Patentblatt 84/48**

(45) Bekanntmachung des Hinweises auf die Patenterteilung:
**05.11.86 Patentblatt 86/45**

(84) Benannte Vertragsstaaten:
**CH DE FR GB IT LI SE**

(56) Entgegenhaltungen:
**DE-C-353 322**
**US-A-1 558 630**
**US-A-3 053 541**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Zimmermann, Horst, Dipl- Ing., J.-Hagenbucher- Strasse 4, D-8000 München 50 (DE)**
Erfinder: **Lorenz, Joachim, Friedrich- Ebert- Strasse 14, D-8060 Dachau (DE)**

**Beschreibung**

Die Erfindung betrifft eine berührungsfreie Dichtung für untereinander kontrarotierende Teile.

Die Abdichtung von Wellen bei geringem Überdruck in einem Gehäuse ist vielfältig gelöst worden, z.B. durch F. Wankel. Bekannte Dichtungen die zur Abdichtung zwischen einem sich drehenden und einem stationären Teil gedacht sind, sind kompliziert und deshalb störungsanfällig. Eine besondere Gattung von den Dichtungen sind die Flüssigkeitsdichtungen oder Flüssigkeitsverschlüsse. Diese benötigen ein geschlossenes Gehäuse das die Flüssigkeit enthält wie z.B. Wasser oder Quecksilber. Abgesehen von Korrosionsproblemen sind solche Dichtungen natürlich nicht reibungsarm was sich besonders bei höheren Drehzahlen nachteilig bemerkbar macht.

Aus der US-A-1,558,630 ist eine Dichtung zwischen einem rotierenden und einem stationären Teil bekannt mit einer Dichtpackung um aus dem geschlossenen Gehäuse der Pumpe das Austreten von Wasser zu verhindern Korrosion und Reibverluste sind bei dieser bekannten Pumpe in erheblichem Ausmaß zu befürchten.

Aus der DE-C-353 322 ist eine Vorrichtung bekannt, wobei Stopfbuchsen eine Welle gegenüber ihrem Gehäuse abdichten. In geschlossenen Kammern die räumlich voneinander getrennt liegen, saugen Ventilatoren Luft von außen an. Die eingesaugte Luft wird dann aus den getrennten Kammern separat wieder in die Atmosphäre befördert. Es sind also hierdrei räumlich getrennte geschlossene Kammern und Dichtpackungen hierfür notwendig was die oben erwähnten Nachteile mit sich bringt. Eine in dieser Schrift noch gezeigte andere Ausführung soll zwar Öl als Dichtmittel verwenden. Diese Ausführung kann jedoch nur in vertikaler Anordnung betrieben werden.

Ein besonderes Problem stellt die Abdichtung von Wellen dar, die zueinander in entgegengesetzten Richtungen drehbar sind. Wollte man z.B. eine übliche Dichtungspackung verwenden, so wäre falls diese effektiv sein soll, ebenfalls ein Reibungsproblem vorhanden. Wollte man die übliche Labyrinthdichtung hierfür einsetzen so würden die dafür notwendigen Spalte zu Lekagen bei Überdruck führen.

Aufgabe der Erfindung ist es eine berührungsfreie Dichtung zu schaffen, die sowohl einfach im Aufbau als auch im Betrieb zuverlässig ist. Die Dichtung soll mit Überdruck (wenn auch relativ gering) und bei höheren Drehzahlen für kontrarotierende Wellen einsetzbar sein.

Lösung:

Berührungsfreie Dichtung für untereinander kontrarotierende Teile, wobei wenigstens eine Scheibe auf einem rotierenden Teil angeordnet ist, der von einem Gehäuseteil umgeben ist und Dichtmittel in den Innenraum des Gehäuseteils einführbar ist.

Die besonderen Vorteile die sich aus den beanspruchten beschriebenen und dargestellten Merkmalen der Erfindung ergeben, sind im wesentlichen:

die Erfindung stellt eine für die geforderten Betriebsbedingungen hervorragend geeignete Dichtvorrichtung zum Abdichten zweier gegeneinander drehbarer Wellen dar.

Sie gestattet eine wechselseitige Druckbeaufschlagung von der einen oder anderen Seite (in Achsrichtung der Welle gesehen) wenn sie zwischen zwei Lagerkammern angeordnet wird.

Die erfindungsgemäße Dichtvorrichtung gestattet sogar große Druckunterschiede zwischen beiden Seiten. Dies macht sie besonders geeignet zur Anwendung bei Flugtriebwerken insbesondere zwischen zwei Lagerkammern kontrarotierende Wellen. Die Erfindung ist selbstverständlich nicht auf diese Anwendung beschränkt. Dort ist jedoch noch ein zusätzlicher Vorteil eine Dichtvorrichtung gemäß der Erfindung nützlich, nämlich das auch ohne besondere Pumpen das fluide Dichtmittel, bevorzugt Öl eine Notschmierung von Lagerstellen ermöglicht, insbesondere dann, wenn z.B. fluglagenabhängig, die normale Schmiermittelversorgung mit Hilfe einer Druckpumpe nicht funktioniert.

Im spiralförmigen Hohlraum bei dem mantelartigen Teil der Erfindung baut sich durch das rotierende Dichtmittel im Betrieb ein hoher Druck auf.

Durch den engen Spalt zwischen der Schleuderscheibe und dem mantelartigen Teil wird das Dichtmittel im Betrieb aufgrund der einsetzenden Fliehkraft radial nach außen geschleudert und in dem spiralförmigen Hohlraum des Mantels gesammelt und aufgrund dessen Erweiterung zu einem Ende hin in eine Rückführleitung befördert. Auf der anderen Seite, z.B. atmosphären Seite eines Drehteils kann Luft durch den engen Spalt dieser Seite zwischen Schleuderscheibe und Mantel in den spiralförmigen Hohlraum eindringen, so daß dort eine Dichtmittelsperre entsteht. Ersichtlich wird so mit Hilfe einfacher Mittel erfindungsgemäß unter Aussetzung der Fliehkraft eine zuverlässige berührungsfreie Abdichtung zwischen zwei kontrarotierenden wellen geschaffen. Die Dichtmittelrückführleitung steht zweckmäßigerweise mit der Lagerkammer eines oder beider Drehteile in Verbindung.

Der Umfangsrand einer Schleuderscheibe kann spitzwinklig ausgebildet sein um ein Wegschleudern des Dichtmittels auch bei geringen Umfangsgeschwindigkeiten eines Drehteils zu ermöglichen. Auf mindestens einer Welle kann eine zweite Schleuderscheibe angeordnet sein, die von dem Mantel mit umschlossen wird. Ferner können Sekundärdichtungen an sich bekannter Art zusätzlich eingebaut werden.

Um auch bei geringeren Umfangsgeschwindigkeiten tropfendes Dichtmittel bzw. Tropföl und eventuell Abschwitzöl aufzufangen können Taschen vorgesehen sein, die am Innenumfang des reifenmantelartigen Teils angeordnet sind.

Wenigstens eine Schleuderscheibe ist mit Vorteil mit Schaufeln bestückt in einer später zu beschreibenden Weise.

Ausführungsbeispiel der Erfindung sind nachstehend unter Bezugnahme auf die Zeichnung näher erläutert. Es zeigen:

Fig. 1 eine berührungsfreie Dichtung gemäß der Erfindung in schematischer Darstellung,

Fig. 2 einen Querschnitt der Ausführungsform nach Fig. 1,

Fig. 3 eine abgewandelte Ausführungsform der Erfindung.

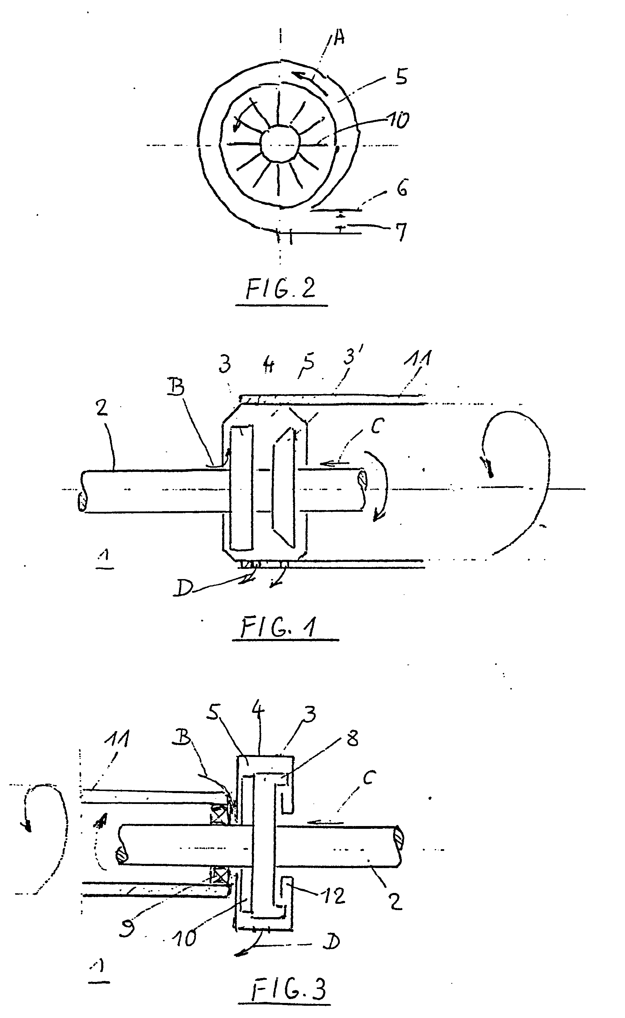

Gemäß der Ausführung nach Fig. 1 sind zwei kontrarotierende Wellen 2 und 11 vorhanden die gegeneinander mit Hilfe der berührungsfreien Dichtung 1 abgedichtet werden. Wenigstens eine der Drehwellen weist eine Schleuderscheibe oder einen integrierten Bund 3 auf die wenigstens teilweise am Umfang von einem im Querschnitt im wesentlichen U-förmigen Mantel 4 umgeben ist. Der Mantel 4 ist bevorzugt ein Blechteil ähnlich der Form eines Reifenmantels. Der Mantel ist vorzugsweise an einem der beiden drehbaren Teile wie Wellen, in Fig. 1 an der Hohlwelle 11, befestigt. Dann dreht er sich mit dieser gegenläufig zur Welle 2.

Wie in Fig. 1 dargestellt, trägt wenigstens eine Welle eine zweite Scheibe 3' die spitzwinklig zum Umfang hin zulaufend ausgebildet ist um mit Sicherheit auch noch ablaufende Tröpfchen während der Drehung abzuschleudern aufzufangen und der Rückführleitung zuzuführen. Dies gilt insbesondere wenn als fluides Dichtmittel Öl verwendet wird.

Die Anordnung und Ausbildung des Mantels 4 ist so getroffen, daß bevorzugt eine Seite (gemäß Fig. 1, links von der Scheibe 3) einer Teile als Dichtmittelseite dient, während die andere Seite des Mantels (gemäß Fig. 1, rechts von der Scheibe 3') als Atmosphärenseite dient, d.h., daß die Hohlwelle 11 eine Verbindung mit der Atmosphäre aufweist z.B. eine Entlüftung. Zwischen jeder Scheibe 3 bzw. 3' und dem Mantel befindet sich sowohl auf der Dichtmittelseite als auch auf der Atmosphärenseite nur ein schmaler Spalt der sich radial zwischen der oder den Schleuderscheiben und dem Mantel erstreckt.

Der radial äußere Teil (Umfangsteil) des Mantels 4 weist Hohlzylinderform auf, wobei die Achse des Hohlzylinders bezüglich der Achse der Drehwelle bzw. Drehwellen versetzt ist. Dadurch entsteht, wie aus Fig. 2 ersichtlich, ein spiralförmiger Hohlraum 5 zwischen dem radial äußeren Mantelabschnitt und der maximalen Erstreckung der Schleuderscheibe 3.

Im Bereich der größten Erweiterung des spiralförmigen Hohlraums 5 ist an diesen eine Rückführleitung 6 für das Dichtmittel angeschlossen ist, die zu einer oder mehreren Lagerkammern führt. In der Rückführleitung 6 befindet sich ein Restriktor 7 der bevorzugt, jedenfalls wenn er für eine Notschmierung förderlich sein soll, düsenartig, ausgebildet ist.

Fig 2 zeigt auch eine Beschaufelung, insbesondere Radialschaufeln 10 auf einer Seite einer Schleuderscheibe 3 in dem Spalt zum Mantel hin angeordnet und diesen im wesentlichen ausfüllend, jedoch berührungsfrei zu diesem umlaufend.

Bei der Ausführung der Erfindung gemäß Fig. 3 ist auf einer Drehwelle eine Sekundärdichtung 9 z.B. ein Gleitring insbesondere dichtmittelseitig der Schleuderscheibe 3 vorgelagert.

Atmosphärenseitig ist die Scheibe 3, mit Vorteil in ihrem Umfangsbereich, zu einem Axialflansch 8 erweitert, zwecks Bildung einer Labyrinthdichtung, zusammen mit den Auffangtaschen 12 für das fluide Dichtmittel, wie Öl, am inneren Umfang des Mantels 4.

Die Wirkungsweise der erfindungsgemäßen Dichtvorrichtung ist wie folgt:

Dichtmittel, vorzugsweise in Form eines Öl-Luft-Gemisches, wird auf der Dichtmittelseite einer Drehwelle durch den Spalt zum Mantel 4 gemäß Pfeil B aufgrund der auf die Scheibe 3 einwirkenden Fliehkraft in den spiralförmigen Hohlraum 5 des Mantels 4 eingesaugt bzw. durch Rotation der Scheibe 3 radial nach außen geschleudert, z.B. mit Hilfe der Schaufeln 10.

Gleichermaßen tritt auf der anderen Seite (Atmosphärenseite) Luft durch den dortigen Spalt in den Hohlraum 5 ein.

Im spiralförmigen Hohlraum baut sich durch das rotierende Öl in Pfeilrichtung A gemäß Fig. 2 ein hoher Druck auf, so daß das Öl über die Rückführleitung 6 und durch den Restriktor 7 in die Lagerkammern zurückgefördert. Der Restriktor dient auch der Begrenzung der Rezirkulationsmenge an Öl. Es ist möglich ihn so einzustellen, daß nur Öl (nicht Luft) zurückbefördert wird.

Wie Pfeil D veranschaulicht ist die Rückführleitung für das Öl jeweils am Ort der größten Erweiterungen des Hohlraums 5 des Mantels 4 angeordnet.

**Patentansprüche**

1. Berührungsfreie Dichtung für untereinander kontrarotierende Teile, wobei wenigstens eine Scheibe (3) auf einem rotierenden Teil angeordnet ist, der von einem Gehäuseteil (4) umgeben ist und Dichtmittel (B) in den Innenraum des Gehäuseteils (4) einführbar ist, welches (bei D) rückführbar ist.

2. Dichtung nach Anspruch 1, dadurch gekennzeichnet, daß das Dichtmittel in einen engen Spalt zwischen der Scheibe (3) am ersten (rotierenden) Teil und einem diese Scheibe wenigstens teilweise umgebenden Teil (4) einführbar ist, der am zweiten (rotierenden) Teil angeordnet ist.

3. Dichtung nach Anspruch 1 oder 2, dadurch gekennzeichnet, daß der die Scheibe (3) wenigstens teilweise umgebende Teil (4) im wesentlichen U-förmig nach Art eines Reifenmantels ausgebildet ist.

4. Dichtung nach Anspruch 1 bis 3, dadurch gekennzeichnet, daß der das Drehteil mit Scheibe (3) berührungsfrei wenigstens teilweise umgebende Teil (4) einen spiralförmigen umfänglichen Hohlraum bildet der sich in Drehrichtung des einen Drehteils erweitert und im Bereich seiner größten Erweiterung an eine Dichtmittelrückführleitung (6) angeschlossen ist.

5. Dichtung nach einem der Ansprüche 1 bis 4, dadurch gekennzeichnet, daß der die Scheibe (3) wenigstens teilweise umgebende reifenmantelartige Teil (4) in oder an einem der drehenden Teile befestigt ist.

6. Dichtung nach einem oder mehreren der vorhergehenden Ansprüche, dadurch gekennzeichnet, daß das die Scheibe wenigstens teilweise umgebende reifenmantelartige Teil (4) wechselseitig mit atmosphärischer Luft bzw. fluidem Dichtmittel beaufschlagbar ist und mit zwei Lagerkammern in Verbindung steht.

7. Dichtung nach einem oder mehreren der vorhergehenden Ansprüche, dadurch gekennzeichnet, daß der die Scheibe (3) wenigstens teilweise umgebende reifenmantelartige Teil (4) im Bereich seines Innenumfangs zum Auffangen von Öl taschenartig ausgebildet ist.

8. Dichtung nach einem oder mehreren der vorhergehenden Ansprüche, dadurch gekennzeichnet, daß bei der Verwendung von Schmiermittel als Dichtmittel die Rücklaufleitung (6) zu einer Schmierstelle für eine Hilfsbzw. Notschmierung, eine düsenartige Austrittsöffnung (7) aufweist.

9. Dichtung nach einem oder mehreren der vorhergehenden Ansprüche, dadurch gekennzeichnet, daß in dem die Scheibe (3) wenigstens teilweise umgebenden reifenmantelartigen Teil (4) zwei koaxial voneinander beabstandete Scheiben (3, 3') angeordnet sind.

10. Dichtung nach Anspruch 9, dadurch gekennzeichnet, daß wenigstens eine der kontrarotierenden Wellen (2, 11) mit einer zusätzlichen an ihrem Umfangsrand spitzwinklig nach außen hin zulaufend ausgebildeten Scheibe (3') versehen ist.

11. Dichtung nach einem oder mehreren der vorhergehenden Ansprüche, dadurch gekennzeichnet, daß wenigstens eine der kontrarotierenden Wellen (2, 11) mit einer zusätzlichen (Sekundär-) Dichtung (9) versehen ist.

## Claims

1. Contact free seal for parts which contra-rotate in respect of one another, at least one disc (3) being disposed on a rotating part which is enclosed by a housing part (4), a sealing medium could be introduced into the interior of the housing part (4), said sealing medium to be returned (at D).

2. Seal according to claim 1, characterised in that the sealing means can be inserted into a narrow gap between the disc (3) on the first (rotating) part and a part (4) which at least partially encloses this disc and which is disposed on the second (rotating) part.

3. Seal according to claim 1 or 2, characterised in that the part (4) which at least partially encloses the disc (3) is constructed to be substantially U-shaped, after the fashion of a tyre casing.

4. Seal according to claim 1 to 3, characterised in that the part (4) which, without contact, at least partially encloses the rotating part with disc (3) constitutes a spirally-shaped peripheral cavity which widens out in the direction of rotation of one rotating part being in the region of its largest widening-out connected to a sealing means return line (6).

5. Seal according to one of claims 1 to 4, characterised in that the part (4) which is like a tyre casing and which at least partially encloses the disc (3) is fixed in or one of the rotating parts.

6. Seal according to one or more of the preceding claims. characterised in that the part (4) which is like a tyre casing and which at least partially encloses the disc can have, atmospheric air or fluid sealing means applied to it alternately and in that it communicates with the two bearing chambers.

7. Seal according to one or more of the preceding claims, characterised in that the part (4) which is like a tyre casing and which at least partially encloses the disc (3) is of pocket-like construction in the region of its inner periphery in order to hold oil.

8. Seal according to one or more of the preceding claims, characterised in that when a lubricant is used as the gealing means the return line (6) to a lubrication point for auxiliary or emergency lubrication comprises a jetlike outlet orifice (7).

9. Seal according to one or more of the preceding claims, characterised in that two discs (3, 3') which are spaced apart coaxially from each other are disposed in the part (4) which is like a tyre casing and which at least partially encloses the disc (3).

10. Seal according to claim 9, characterised in that at least one of the contra-rotating shafts (2, 11) is provided with an additional disc (3') which on its peripheral edge is acutely angled to converge outwardly.

11. Seal according to one or more of the preceding claims, characterised in that at least of the contrarotating shafts (2, 11) is proviced with an additional (secondary) seal (9).

**Revendications**

1°) Joint d'étanchéité sans contact pour des pièces tournant l'une par rapport à l'autre en sens opposé, comportant au moins un disque (3) sur une pièce tournante, disque entouré par une partie de boîtier (4) et l'agent d'étanchéité (B) est introduit dans la cavité de la partie de boîtier (4) et est fourni en retour (en D).

2°) Joint d'étanchéité selon la revendication 1, caractérisé en ce que l'agent d'étanchéité s'introduit par une fente étroite entre le disque (3) de la première pièce (rotative) et une pièce (4) entourant au moins partiellement ce disque, et qui est prévue sur la seconde pièce (rotative).

3°) Joint d'étanchéité selon la revendication 1 ou 2, caractérisé en ce que la pièce (4) qui entoure au moins partiellement le disque (3) a une section essentiellement en forme de U du type d'un pneumatique.

4°) joint d'étanchéité selon les revendications 1 à 3, caractérisé en ce que la partie tournante comportant le disque (3) forme avec la partie (4) qui l'entoure au moins partiellement, sans contact, une cavité périphérique en spirale qui va en s'élargissant en direction d'une pièce rotative et est reliée à une conduite de retour d'agent d'étanchéité (6) à l'endroit de sa plus grande extension.

5°) Joint d'étanchéité selon l'une des revendications 1 à 4, caractérisé en ce que la partie (4) en forme de pneumatique qui entoure au moins partiellement le disque (3) est fixée dans ou sur l'une des pièces rotatives.

6°) Joint d'étanchéité selon l'une ou plusieurs des revendications précédentes, caractérisé en ce que la pièce (4) en forme de pneumatique qui entoure au moins partiellement le disque est soumise à l'action alternée de l'air atmosphérique ou de l'agent d'étanchéité fluide et communique avec deux chambres de palier.

7°) Joint d'étanchéité selon l'une ou plusieurs des revendications précédentes,, caractérisé en ce que la pièce (4) en forme de pneumatique qui entoure au moins partiellement le disque (3) est réalisée à la manière d'une poche pour recueillir l'huile au niveau de sa périphérie intérieure.

8°) Joint d'étanchéité selon l'une ou plusieurs des revendications précédentes, caractérisé en ce qu'en utilisant de l'huile de graissage comme agent d'étancheité, la conduite de retour (6) comporte un orifice de sortie en forme de buse allant vers un point de graissage pour assurer un graissage auxiliaire ou de secours.

9°) Joint d'étanchéité selon l'une ou plusieurs des revendications précédentes, caractérisé en ce que la partie (4) en forme de pneumatique qui entoure au moins partiellement le disque (3) reçoit deux disques (3, 3') coaxiaux distants l'un de l'autre.

10°) Joint d'étancnéité selon la revendication 9, caractérisé en ce qu'au moins l'un des axes (2, 11) tournant en sens opposé comporte un disque (3') qui a en outre un bord se terminant par une section en angle aigu.

11°) Joint d'étanchéité selon l'une ou plusieurs des revendications précédentes, caractérisé en ce qu'au moins l'un des axes (2, 11) tournant en sens opposé est muni d'un joint supplémentaire (9) (secondaire).

FIG. 2

FIG. 1

FIG. 3